(19) Europäisches Patentamt
European Patent Office
Office européen des brevets

(11) **EP 1 588 895 B1**

(12) **EUROPÄISCHE PATENTSCHRIFT**

(45) Veröffentlichungstag und Bekanntmachung des Hinweises auf die Patenterteilung:
**02.11.2011 Patentblatt 2011/44**

(51) Int Cl.:
***B60Q 3/02*** *(2006.01)*

(21) Anmeldenummer: **05007159.6**

(22) Anmeldetag: **01.04.2005**

(54) **LED-Beleuchtungseinrichtung**

LED lighting device

Dispositif d'éclairage par LEDs

(84) Benannte Vertragsstaaten:
**DE FR GB**

(30) Priorität: **24.04.2004 DE 102004020119**

(43) Veröffentlichungstag der Anmeldung:
**26.10.2005 Patentblatt 2005/43**

(73) Patentinhaber: **Diehl Aerospace GmbH**
**88662 Überlingen (DE)**

(72) Erfinder: **Klettke, Oliver, Dr.**
**90482 Nürnberg (DE)**

(74) Vertreter: **Diehl Patentabteilung**
**c/o Diehl Stiftung & Co. KG**
**Stephanstrasse 49**
**90478 Nürnberg (DE)**

(56) Entgegenhaltungen:
**EP-A- 0 323 682          WO-A-00/58664**
**WO-A-02/50472          US-A- 5 808 592**
**US-A1- 2003 072 153          US-A1- 2003 174 499**
**US-A1- 2004 052 076          US-A1- 2005 063 194**

**Beschreibung**

Die Erfindung bezieht sich auf eine Beleuchtungseinrichtung, die vor allem zur Innenraumbeleuchtung in einem Fahr- oder Flugzeug, insbesondere in einem Passagierflugzeug, vorgesehen ist.

Zur Ausleuchtung des Innenraums eines Flugzeugs werden bislang überwiegend Leuchtstofflampen eingesetzt. Bei ausschließlichem Einsatz von Leuchtstofflampen ist es jedoch nur sehr eingeschränkt möglich, die Helligkeit der Innenraumbeleuchtung zu verändern oder ihr Farbspektrum zu variieren. Dies wird vielfach als nachteilig empfunden. Insbesondere wird bei der Konzeption einer modernen Beleuchtungseinrichtung in der Luftfahrttechnik in zunehmenden Maße sogenanntes "mood lighting" eingesetzt. Dabei wird die Erkenntnis ausgenützt, dass durch Anpassung der Innenraumbeleuchtung an die Tagessituation die Stimmung und damit das Wohlbefinden der Fluggäste, insbesondere während eines langen Interkontinentalfluges, positiv beeinflussbar ist. So hat beispielsweise eine Innenraumbeleuchtung mit hohem Blau-Anteil eine beruhigende Wirkung und kann somit die Erholung der Fluggäste während eines Nachtfluges fördern. Ebenso kann es wünschenswert sein, die Beleuchtungsstimmung kontinuierlich und langsam zu variieren, um z. B. die während eines Sonnenaufgangs oder Sonnenuntergangs erfolgende natürliche Lichtänderung zu simulieren.

Um eine derartige Variation der Beleuchtungssituation zu ermöglichen, werden für die Innenraumbeleuchtung eines Flugzeuges zunehmend Leuchtdioden (LED) eingesetzt. Im Gegensatz zu einer Leuchtstofflampe, die häufig derart ausgebildet ist, dass sie weißes Licht mit einer dem Sonnenlicht nachgebildeten Spektralverteilung erzeugt, emittiert eine einzelne Leuchtdiode Licht in einem vergleichsweise engbandigen Spektralbereich. Um eine vorbestimmte Lichtfarbe einzustellen und insbesondere, um diese Lichtfarbe variieren zu können, wird deshalb bei einer LED-basierten Beleuchtungseinrichtung in der Regel eine Kombination verschiedenfarbiger Leuchtdioden, z.B. in der Farbkombination rot-blau-grün, eingesetzt. Die verschiedenfarbigen Leuchtdioden werden derart angesteuert, dass insgesamt ein Mischlicht der gewünschten Lichtfarbe erzeugt wird. Herkömmlicherweise werden die einzelnen Leuchtdioden der Beleuchtungseinrichtung linienförmig hintereinander angeordnet, wobei die Farbe der Leuchtdioden entlang dieser Anordnung rotierend wechselt. Ein häufig, aufgrund der dort vergleichsweise begrenzten Platzverhältnisse insbesondere bei einem Flugzeug, auftretendes Problem einer LED-basierten Beleuchtungseinrichtung ist, dass der Abstand zwischen den Leuchtdioden und der nächstgelegenen Wand des zu beleuchtenden Innenraums zu klein ist, als dass auf dieser Strecke eine vollständige Durchmischung der von den einzelnen Leuchtdioden erzeugen Lichtanteile stattfinden würde. Die Folge hiervon ist, dass die beleuchtete Wand fleckig und damit für den Betrachter "unruhig" erscheint. Dieser Effekt beeinträchtigt die Wirkung der erzielten Innenraumbeleuchtung und ist somit unerwünscht.

Deshalb ist man dazu übergegangen, die Leuchtdioden flächig, d. h. zweidimensional verteilt anzuordnen, wie das z. B. in der US 5,808,592, der WO 02/50472 A1 und der WO 00/58664 A1 beschrieben ist. Dabei sind die Leuchtdioden der einzelnen Farben jeweils punktsymmetrisch bezüglich des Flächenmittelpunkts der gesamten, mit Leuchtdioden versehenen Fläche angeordnet. Dadurch erfolgt bei direkter Beleuchtung eine gute Farbdurchmischung im beleuchteten Lichtfleck. Eine flächig gleichmäßige indirekte Beleuchtung ist damit jedoch nicht gewährleistet.

Ein weiterer, häufig auftretender Nachteil einer herkömmlichen LED-basierten Beleuchtungseinrichtung ist, dass die verschiedenfarbigen Leuchtdioden unterschiedlich stark belastet werden, zumal bei einer durchschnittlichen Beleuchtungssituation der Rotlichtanteil dominiert, wohingegen Grünlicht nur einen vergleichsweise geringen Anteil an der Gesamtbeleuchtungsstärke einnimmt. Die vergleichsweise starke Belastung der insbesondere roten Leuchtdioden führt wiederum zu einem vorzeitigen Verschleiß dieser Leuchtdiodensorte und damit zu einer vergleichsweise kurzen Standzeit der Beleuchtungseinrichtung.

Der Erfindung liegt die Aufgabe zugrunde, eine LED-basierte Beleuchtungseinrichtung anzugeben, die einen insbesondere im Hinblick auf eine lange Standzeit rationalen Betrieb ermöglicht und gute Beleuchtungseigenschaften (insbesondere gute Farbmischung) aufweist.

Diese Aufgabe wird erfindungsgemäß gelöst durch die Merkmale des Anspruchs 1. Danach umfasst die Beleuchtungseinrichtung mehrere Leuchtdioden, wobei jede Leuchtdiode einer von mindestens zwei Gruppen zugeordnet ist. Jede Gruppe m=1,2,3,... umfasst eine vorgegebene Anzahl von $N_m = 1,2,3,...$ Leuchtdioden. Der Begriff der Gruppe wird dadurch definiert, dass Leuchtdioden derselben Gruppe gleichartig sind, z.B. dieselbe Farbe aufweisen, und dass Leuchtdioden verschiedener Gruppen verschiedenartig sind. Erfindungsgemäß sind die Leuchtdioden der verschiedenen Gruppen in einem zweidimensionalen geometrischen Gesamtmuster innerhalb eines Flächenelements verteilt.

Der der Erfindung zugrunde liegende Gedanke besteht darin, die einzelnen Leuchtdioden der Beleuchtungseinrichtung analog zu den Atomen eines Kristallgitters auf einer Gitterstruktur anzuordnen, die jedoch im Gegensatz zu einem Kristallgitter lediglich zweidimensional ist. Das Flächenelement stellt das Analogon der Elementarzelle eines Kristallgitters dar. So wie die Eigenschaften eines Kristallgitters vollständig durch die Anordnung der Atome in seiner Elementarzelle beschrieben werden, werden die Eigenschaften der Beleuchtungseinrichtung durch die Anordnung der Leuchtdioden innerhalb des Flächenelements bestimmt. Wesentlich ist, dass diese Anordnung der Leuchtdioden erfindungsgemäß nicht linear und somit eindimensional, sondern in einem zweidimensionalen Gesamtmuster erfolgt. Unter dem Begriff Gesamtmuster wird eine innerhalb des Flächenelements aufgenommene, geschlossene und flächige Netzstruktur verstanden, in deren Eck- und Kreuzungspunkten jeweils eine Leuchtdiode angeordnet ist.

Zur Bildung einer größeren Einheit von Leuchtdioden können eine beliebige Anzahl von Flächenelementen kachelartig eindimensional oder zweidimensional aneinander angesetzt werden.

Es hat sich gezeigt, dass durch die flächige Anordnung der verschiedenartigen, insbesondere verschiedenfarbigen Leuchtdioden eine wesentliche Verbesserung einer LED-Beleuchtungseinrichtung erzielt wird. Zum einen können die verschiedenen Gruppen von Leuchtdioden in ihrer relativen Leuchtdiodenanzahl im Hinblick auf eine gewünschte Beleuchtungssituation derart dimensioniert werden, dass im Durchschnitt alle Leuchtdioden etwa gleich stark belastet sind. Infolge der flächigen Anordnung der Leuchtdioden kann dabei auch bei unterschiedlicher Leuchtdiodenanzahl zwischen den verschiedenen Gruppen eine vergleichsweise homogene Leuchtdiodenverteilung innerhalb des Flächenelementes erzielt werden. Hierdurch wird der durchschnittliche Abstand verschiedenartiger Leuchtdioden innerhalb des Flächenelements und zwischen einem Flächenelement und einem angrenzenden Flächenelement auf ein vergleichsweise kleines Maß reduziert, wodurch wiederum eine besonders gute Lichtdurchmischung erreicht wird.

Für eine besonders homogene Lichtverteilung hat es sich als vorteilhaft erwiesen, das Gesamtmuster derart zu wählen, dass sein Flächenschwerpunkt auf einer Mittelachse des Flächenelements liegt. Bei einer Anzahl von M = 2,3,4,... Gruppen und einer Anzahl von $N_m$=1,2,3,... Leuchtdioden der m-ten Gruppe (m = 1,2,...,M) ist der Flächenschwerpunkt des Gesamtmusters gegeben durch

$$R = \frac{\sum_{m=1}^{M}\sum_{n=1}^{N_m} r_{nm}}{\sum_{m=1}^{M} N_m} \qquad\qquad \text{Glg. 1,}$$

wobei $r_{nm} = (x_{nm}, y_{nm})$ der Ortsvektor der n-ten Leuchtdiode der m-ten Gruppe und R = (X , Y) der Ortsvektor des Flächenschwerpunktes ist. Die Komponenten $x_{nm}$, $y_{nm}$, X und Y der Ortsvektoren $r_{nm}$ bzw. R sind dabei durch ein in dem Flächenelement definiertes Koordinatensystem bestimmt, dessen Nullpunkt bevorzugt bezüglich des Flächenelements zentriert ist.

Gemäß der Erfindung sind auch die Leuchtdioden derselben Gruppe untereinander in einem zweidimensionalen geometrischen Gruppenmuster auf dem Flächenelement verteilt, vorausgesetzt, dass die Gruppe, die zur Bildung einer zweidimensionalen Struktur erforderliche Mindestanzahl von drei Leuchtdioden aufweist. Zur weiteren Homogenisierung der Beleuchtungscharakteristik trägt hier wiederum bei, dass das Gruppenmuster derart auf dem Flächenelement positioniert ist, dass sein Flächenschwerpunkt auf einer Mittelachse des Flächenelements liegt. Der Flächenschwerpunkt des Gruppenmusters der m-ten Gruppe ist analog zu Glg. 1 durch

$$R_m = \frac{1}{N_m} \cdot \sum_{n=1}^{N_m} r_{nm} \qquad\qquad \text{Glg. 2}$$

gegeben, wobei $R_m = (X_m,Y_m)$ den Ortsvektor des Gruppenmusters in dem oben genannten Koordinatensystem bezeichnet.

Eine besonders gute Farbmischung unter Beibehaltung der oben erwähnten homogenen Lichtverteilung wird - insbesondere bei Aneinandersetzung mehrerer Flächenelemente - nun dadurch erreicht, dass die Verteilung der Leuchtdioden auf dem Flächenelement derart erfolgt, dass die Flächenschwerpunkte mindestens zweier Gruppenmuster an unterschiedlichen Stellen auf der Mittelachse des Flächenelements liegen.

Vorzugsweise ist das Verhältnis der Leuchtdiodenanzahlen $N_m$ der verschiedenen Gruppen derart gewählt, dass unter durchschnittlichen Betriebsbedingungen, auf welche die Beleuchtungseinrichtung ausgelegt ist, alle Leuchtdioden etwa gleich stark belastet sind. Die Anzahl von Leuchtdioden zweier verschiedener Gruppen ist hierbei unterschiedlich gewählt. In einer bevorzugten Ausführung der Erfindung sind drei Gruppen von Leuchtdioden vorgesehen, nämlich eine erste Gruppe mit roten Leuchtdioden, eine zweite Gruppe mit blauen Leuchtdioden und eine dritte Gruppe mit grünen Leuchtdioden. Für eine übliche Innenraumbeleuchtung ist es dabei vorteilhaft, dass die erste Gruppe eine größere Anzahl von Leuchtdioden aufweist als die zweite und dritte Gruppe. Eine weitere Verbesserung wird dadurch erzielt, dass die zweite Gruppe wiederum mehr Leuchtdioden aufweist als die dritte Gruppe. Zur Erzeugung von weißem Licht mit einer Farbtemperatur von etwa 4.500 K hat es sich insbesondere als vorteilhaft erwiesen, rote, blaue und grüne Leuchtdioden in einem Anzahlverhältnis von $N_1:N_2:N_3 = 5:4:3$ einzusetzen. Dieses Anzahlverhältnis ist insbesondere im Hinblick auf die unterschiedliche Sensitivität des menschlichen Auges für die Farben Rot, Blau und Grün als auch im Hinblick auf den vergleichsweise geringen Lichtstrom handelsüblicher blauer Leuchtdioden günstig.

Als besonders vorteilhaftes Gruppenmuster zur Anordnung der roten Leuchtdioden der ersten Gruppe hat sich die Form eines flächenzentrierten Parallelogramms herausgestellt. In dieser Anordnung sind vier Leuchtdioden in den Ecken eines Parallelogramms angeordnet. Eine fünfte Leuchtdiode ist im Zentrum des Parallelogramms angeordnet. Die Anordnung der vier blauen Leuchtdioden der zweiten Gruppe erfolgt zweckmäßigerweise in einem Gruppenmuster in Form eines einfachen Parallelogramms. Hierunter wird verstanden, dass je eine Leuchtdiode in jeder Ecke eines Parallelogramms angeordnet ist. Die drei grünen Leuchtdioden der dritten Gruppe sind bevorzugt in Form eines gleichschenkligen und zumindest im Wesentlichen gleichseitigen Dreiecks angeordnet.

Das Flächenelement ist insbesondere rechteckig gewählt. Als günstig hat sich hierbei ein Längen-Breiten-Verhältnis zwischen 1,2 und 1,5 erwiesen. Bevorzugt beträgt das Längen-Breiten-Verhältnis des Flächenelements im Wesentlichen 1,375.

In einer besonders vorteilhaften Ausführung der Erfindung sind die Leuchtdioden der ersten und zweiten Gruppe entlang der Diagonalen des rechteckigen Flächenelements angeordnet, so dass in Richtung einer ersten Diagonale zwei Leuchtdioden der zweiten Gruppe alternierend zwischen drei Leuchtdioden der ersten Gruppe angeordnet sind, während entlang der zweiten Diagonale drei Leuchtdioden der ersten Gruppe zwischen zwei Leuchtdioden der zweiten Gruppe angeordnet sind. Zweckmäßigerweise sind dabei die Leuchtdioden auf beiden Diagonalen im Wesentlichen derart angeordnet, dass zwischen benachbarten Leuchdioden stets etwa der gleiche Abstand gebildet ist. Weiterhin hat es sich als vorteilhaft erwiesen, die grünen Leuchtdioden der dritten Gruppe bezüglich den Leuchtdioden der ersten und zweiten Gruppe derart anzuordnen, dass eine grüne Leuchtdiode zu je zwei blauen und roten Leuchtdioden im Wesentlichen den gleichen Abstand hat, so dass die roten und blauen Leuchtdioden etwa in einem Kreisbogensegment um die grüne Leuchtdiode herum angeordnet sind.

Die Leuchtdioden einer Gruppe sind bevorzugt gemeinsam angesteuert, so dass im Betrieb der Beleuchtungseinrichtung aller Leuchtdioden der Gruppe stets die gleiche Helligkeit aufweisen und in gleicher Weise belastet werden.

Zur Realisierung einer größeren Einheit von Leuchtdioden, wie sie zur Beleuchtung eines gesamten Innenraums in der Regel erforderlich ist, sind mehrere Flächenelemente angrenzend entlang einer gemeinsamen Mittelachse aneinandergereiht, so dass sich das Gesamtmuster der Leuchtdioden eines Flächenelements analog zu einem Kristallgitter in jedem angrenzenden Flächenelement periodisch wiederholt. Um insbesondere Leuchtdioden, die nur in vergleichsweise geringer Anzahl vorhanden sind, homogen zu verteilen, ist vorgesehen, dass das Grundmuster einer solchen Gruppe von Leuchtdioden derart auf dem Flächenelement positioniert ist, dass es mit dem Grundmuster der gleichen Gruppe eines angrenzenden Flächenelementes sich zu einem flächenzentrierten Rechteckgitter ergänzt.

Nachfolgend wird eine Ausführungsform der Erfindung anhand eines Beispiels näher erläutert. Darin zeigen:

Fig. 1  eine Beleuchtungseinrichtung mit drei fluchtend aneinander angrenzenden identischen Flächenelementen, wobei jedes Flächenelement eine Anzahl von Leuchtdioden dreier Gruppen enthält, wobei die Leuchtdioden innerhalb eines jeden Flächenelements in einem identischen zweidimensionalen geometrischen Gesamtmuster angeordnet sind,

Fig. 2  ein Flächenelement der Beleuchtungseinrichtung gemäß Fig. 1, in welchem eine in einem Grundmuster in Form eines flächenzentrierten Parallelogramms angeordnete erste Gruppe von Leuchtdioden optisch hervorgehoben ist,

Fig. 3  das Flächenelement gemäß Fig. 2, in welchem eine in einem Gruppenmuster in Form eines einfachen Parallelogramms angeordnete zweite Gruppe von Leuchtdioden optisch hervorgehoben ist,

Fig. 4  das Flächenelement gemäß Fig. 2, in welchem eine in einem Gruppenmuster in Form eines im Wesentlichen gleichseitigen Dreiecks angeordnete dritte Gruppe von Leuchtdioden optisch hervorgehoben ist und

Fig. 5  zwei Flächenelemente der Beleuchtungseinrichtung gemäß Fig. 1, wobei durch gestrichelte Linien verdeutlicht ist, dass die Leuchtdioden der dritten Gruppen der benachbarten Flächenelemente sich zu einem flächenzentrierten Rechteckgitter ergänzen.

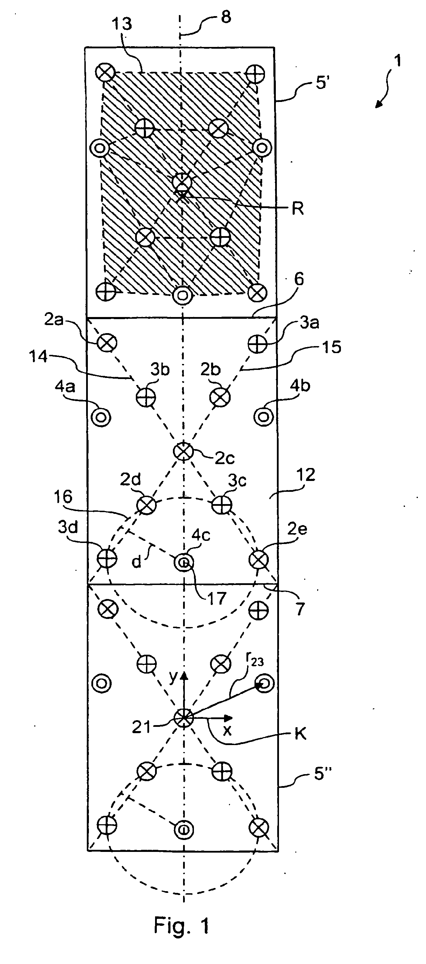

Die in Fig. 1 dargestellte Beleuchtungseinrichtung 1 umfasst zwölf Leuchtdioden 2a-2e, 3a-3d und 4a-4c, die innerhalb eines rechtwinkligen Flächenelements 5 mit einem Längen-Breiten-Verhältnis von im Wesentlichen 1,375 angeordnet sind. An beiden Schmalseiten 6 und 7 des Flächenelements 5 schließt je ein weiteres Flächenelement 5' bzw. 5" an. Die Flächenelemente 5,5',5" sind kachelartig aneinander angesetzt und somit fluchtend bezüglich einer gemeinsamen Mittelachse 8 zentriert. Die Flächenelemente 5,5',5" sind identisch. Insbesondere enthält jedes Flächenelement 5,5',5" eine identische Leuchtdiodenanordnung.

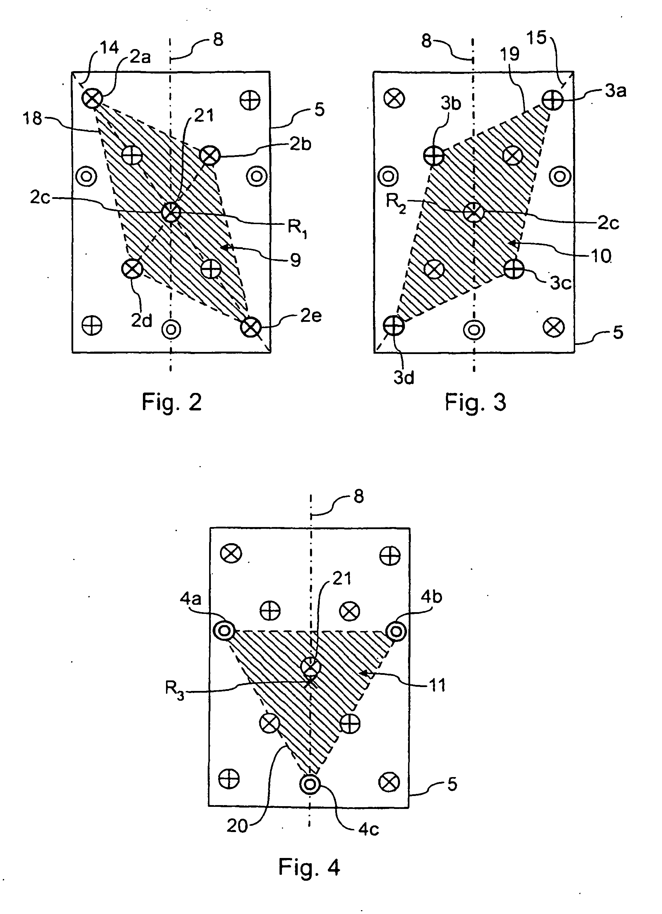

Die Leuchtdioden 2a-2e, 3a-3d, 4a-4c sind hinsichtlich ihrer Farbe drei Gruppen zugeordnet. Die fünf Leuchtdioden 2a-2e sind rot und bilden somit eine erste Gruppe 9 (in Fig. 2 optisch hervorgehoben). Die vier Leuchtdioden 3a-3d sind blau und bilden eine zweite Gruppe 10 (in Fig. 3 optisch hervorgehoben). Die verbleibenden drei Leuchtdioden 4a-4c sind grün und bilden eine dritte Gruppe 11 (in Fig. 4 optisch hervorgehoben).

Die Leuchtdioden 2a-2e, 3a-3d und 4a-4c eines jeden Flächenelements 5,5',5" sind auf einem gemeinsamen

4

Träger 12, insbesondere einer Leiterplatte, aufmontiert und derart kontaktiert, dass die Leuchtdioden 2a-2e, 3a-3d und 4a-4c jeweils gruppenweise gemeinsam ansteuerbar sind. Die Größe des Trägers 12 entspricht in dem in Fig. 1 dargestellten Ausführungsbeispiel einem einzelnen Flächenelement 5,5'5". Die Größe des Trägers 12 kann sich alternativ jedoch auch von der Größe des Flächenelements 5,5',5" unterscheiden. So könnte beispielsweise ein Träger eingesetzt werden, der sich über mehrere Flächenelemente 5,5',5" erstreckt. Die Flächenausdelnung des Trägers 12 kann das Flächenelement 5,5',5" aber andererseits auch unterschreiten.

Die Leuchtdioden 2a-2e, 3a-3d und 4a-4c sind flächig über das Flächenelement 5,5',5" verteilt, so dass ihre Anordnung ein zweidimensionales geometrisches Gesamtmuster 13 bildet. Dieses Gesamtmuster 13 ist in Fig. 1 im Bereich des Flächenelements 5' beispielhaft durch gestrichelte Linien und eine gepunktet ausgefüllte Fläche optisch hervorgehoben. Wie aus Fig. 1 zu erkennen ist, ist das Gesamtmuster 13 achsensymmetrisch ausgebildet und derart auf dem Flächenelement 5,5',5" ausgerichtet, dass die Mittelachse 8 die Symmetrieachse des Gesamtmusters 13 bildet. Der nach Glg. 1 berechenbare Flächenschwerpunkt R des Gesamtmusters 13 liegt somit auf der Mittelachse 8. Die in Glg. 1 eingehenden Ortsvektoren $r_{nm}$ (beispielhaft dargestellt ist der Ortsvektor $r_{23}$ der zweiten Leuchtdiode 4b der dritten Gruppe 11) sind durch das im Bereich des Flächenelements 5" beispielhaft eingetragene Koordinatensystem K eines jeden Flächenelements 5,5',5" definiert.

Die Leuchtdioden 2a-2e der ersten Gruppe 9 und die Leuchtdioden 3a-3d der zweiten Gruppe 10 sind derart angeordnet, dass sie auf den Diagonalen 14 und 15 des Flächenelements 5,5',5" liegen und auf diesen Diagonalen 14 und 15 etwa äquidistant verteilt sind. Dabei wechselt die Gruppenzugehörigkeit der auf der Diagonale 14 angeordneten Leuchtdioden 2a,3b,2c,3c und 2e alternierend, so dass sich entlang dieser Diagonale 14 die Farbkombination rot-blau-rot-blau-rot ergibt. Entlang der Diagonale 15 rahmen die zwei blauen Leuchtdioden 3a und 3d die drei roten Leuchtdioden 2b,2c und 2d ein. Wie ebenfalls aus Fig. 1 zu erkennen ist, ist die grüne Leuchtdiode 4c zu den nächstliegenden blauen und roten Leuchtdioden 2d,2e,3c,3d derart angeordnet, dass sie zu diesen im Wesentlichen stets denselben Abstand d einnimmt, so dass die roten und blauen Leuchtdioden 2d,2e,3c,3d mit alternierendem Farbwechsel im Wesentlichen auf einem Kreisbogen 16 mit einem dem Abstand d entsprechenden Radius liegen, in dessen Mittelpunkt 17 sich die Leuchtdiode 4c befindet.

Durch die jeweilige optische Hervorhebung in den Fig. 2, 3 und 4 ist verdeutlicht, dass die Leuchtdioden 2a-2e, 3a-3d, 4a-4c einer jeden Gruppe 9 bzw. 10 bzw. 11 für sich gesehen wiederum jeweils in einem zweidimensionalen geometrischen Gruppenmuster 18 bzw. 19 bzw. 20 angeordnet sind. Das in Fig. 2 abgebildete Gruppenmuster 18 der ersten Gruppe 9 entspricht einem entlang der Diagonale 14 ausgerichteten flächenzentrierten Parallelogramm. Das der zweiten Gruppe 10 zugeordnete Gruppenmuster 19 weist die Form eines einfachen, d.h. nur an den Eckpunkten mit den Leuchtdioden 3a-3d besetzten Parallelogramms auf. Das der dritten Gruppe 11 zugeordnete Gruppenmuster 20 hat schließlich die Form eines gleichschenkligen und im Wesentlichen gleichseitigen Dreiecks. Der jeweilige Flächenmittelpunkt $R_m$ (m = 1,2,3) der ersten Gruppe 9 bzw. zweiten Gruppe 10 bzw. dritten Gruppe 11) liegt ebenfalls stets auf der Mittelachse 8. So fallen die Flächenmittelpunkte $R_1$ und $R_2$ der Gruppenmuster 18 bzw. 19 im Zentrum 21 des Flächenelements 5,5',5", und damit am Ort der Leuchtdiode 2c, zusammen. Der Flächenmittelpunkt $R_3$ des Gruppenmusters 20 liegt dagegen etwas versetzt zum Zentrum 21.

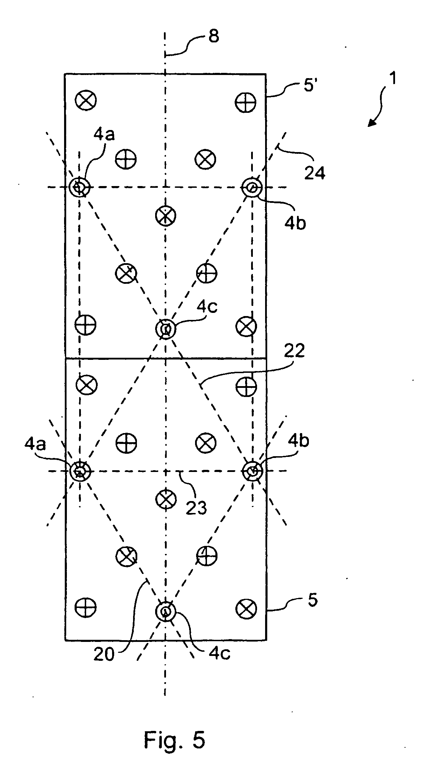

Die Größe des dreieckigen Gruppenmusters 20 ist bezüglich des Flächenelements 5,5',5" so bemessen, dass die Leuchtdioden 4a und 4b des Flächenelements 5 mit der Leuchtdiode 4c des angrenzenden Flächenelements 5' wiederum ein dreieckiges Muster 22 bilden, welches das an der Verbindungslinie 23 gespiegelte Spiegelbild des Gruppenmuster 20 darstellt. Die Leuchtdioden 4a-4c der aneinander angrenzenden Flächenelemente 5,5',5" bilden somit Kreuzungspunkte eines flächenzentrierten Rechteckgitters 24, das durch gestrichelte Linien in Fig. 5 angedeutet ist.

**Bezugszeichenliste**

| | |
|---|---|
| 1 | Beleuchtungseinrichtung |
| 2a-2e | Leuchtdiode |
| 3a-3d | Leuchtdiode |
| 4a-4c | Leuchtdiode |
| 5,5',5" | Flächenelement |
| 6 | Schmalseite |
| 7 | Schmalseite |
| 8 | Mittelachse |
| 9 | (erste) Gruppe |
| 10 | (zweite) Gruppe |
| 11 | (dritte) Gruppe |
| 12 | Träger |

| 13 | Gesamtmuster |
| 14 | Diagonale |
| 15 | Diagonale |
| 16 | Kreisbogen |
| 17 | Mittelpunkt |
| 18 | Gruppenmuster |
| 19 | Gruppenmuster |
| 20 | Gruppenmuster |
| 21 | Zentrum |
| 22 | Muster |
| 23 | Verbindungslinie |
| 24 | (flächenzentriertes) Rechteckgitter |

| R | Flächenschwerpunkt (des Gesamtmusters) |
| $R_m$ | Flächenschwerpunkt (des Gruppenmusters der m-ten Gruppe), m = 1,2,...,M |
| K | Koordinatensystem |
| d | Abstand |

**Patentansprüche**

1. Fahrzeug- oder Flugzeuginnenraum-Beleuchtungseinrichtung (1) mit mehreren auf einem Flächenelement (5,5',5") angeordneten Leuchtdioden (2a-2e,3a-3d,4a-4c) mindestens zweier Gruppen (9,10,11), wobei jede der Leuchtdioden einer der mindestens zwei Gruppen zugeordnet ist,
wobei jede Gruppe (9,10,11) mehrere gleichfarbige Leuchtdioden (2a-2e;3a-3d;4a-4c) umfasst, und Leuchtdioden (2a-2e,3a-3d,4a-4c) verschiedener Gruppen (9,10,11) verschiedenfarbig sind,
und wobei die Leuchtdioden (2a-2e,3a-3d,4a-4c) in einem zweidimensionalen geometrischen Gesamtmuster (13) auf dem Flächenelement (5,5',5") verteilt sind und der Flächenschwerpunkt (R) des Gesamtmusters (13) auf einer Mittelachse (8) des Flächenelements (5,5',5") liegt,
wobei weiterhin die Leuchtdioden (2a-2e,3a-3d,4a-4c) jeder Gruppe (9,10,11) mit mindestens drei Leuchtdioden in einem zweidimensionalen geometrischen Gruppenmuster (18,19,20) auf dem Flächenelement (5,5',5") derart verteilt angeordnet sind, dass der Flächenschwerpunkt ($R_m$) des jeweiligen Gruppenmusters (18,19,20) ebenfalls auf der Mittelachse (8) des Flächenelements (5,5',5") liegt,
**dadurch gekennzeichnet,**
**dass** die Flächenschwerpunkte ($R_m$) mindestens zweier Gruppenmuster (18,19,20) an unterschiedlichen Stellen auf der Mittelachse (8) des Flächenelements (5,5',5") liegen.

2. Beleuchtungseinrichtung nach Anspruch 1,
**dadurch gekennzeichnet,**
**dass** sich mindestens zwei Gruppen (9,10,11) in der jeweils zugeordneten Anzahl ($N_m$) von Leuchtdioden (2a-2e, 3a-3d,4a-4c) unterscheiden.

3. Beleuchtungseinrichtung (1) nach Anspruch 1 oder 2,
**dadurch gekennzeichnet,**
**dass** sich Leuchtdioden (2a-2e,3a-3d,4a-4c) verschiedener Gruppen (9,10,11) durch ihre Farbe unterscheiden, wobei die oder jede Leuchtdiode (2a-2e) einer ersten Gruppe (9) rot, die oder jede Leuchtdiode (3a-3d) einer zweiten Gruppe (10) blau, und die oder jede Leuchtdiode (4a-4c) einer dritten Gruppe (11) grün ist.

4. Beleuchtungseinrichtung (1) nach Anspruch 3.
**dadurch gekennzeichnet,**
**dass** die jeweilige der ersten Gruppe (9), der zweiten Gruppe (10) und der dritten Gruppe (11) zugeordnete Anzahl ($N_m$) von Leuchtdioden (2a-2e;3a-3d;4a-4c) in einem Verhältnis 5:4:3 steht.

5. Beleuchtungseinrichtung (1) nach Anspruch 4,
**dadurch gekennzeichnet,**
**dass** die Leuchtdioden (2a-2e) der ersten Gruppe (9) in einem Gruppenmuster (18) in Form eines flächenzentrierten Parallelogramms angeordnet sind.

**6.** Beleuchtungseinrichtung (1) nach Anspruch 4 oder 5,
**dadurch gekennzeichnet,**
**dass** die Leuchtdioden (3a-3d) der zweiten Gruppe (10) in einem Gruppenmuster (19) in Form eines einfachen Parallelogramms angeordnet sind.

**7.** Beleuchtungseinrichtung (1) nach einem der Ansprüche 4 bis 6,
**dadurch gekennzeichnet,**
**dass** die Leuchtdioden (4a-4c) der dritten Gruppe (11) in einem Gruppenmuster (20) in Form eines gleichseitigen Dreiecks angeordnet sind.

**8.** Beleuchtungseinrichtung (1) nach einem der Ansprüche 1 bis 7,
**dadurch gekennzeichnet,**
**dass** das Flächenelement (5,5',5'') rechteckig ist.

**9.** Beleuchtungseinrichtung (1) nach Anspruch 8,
**dadurch gekennzeichnet,**
**dass** das Flächenelement (5,5'5'') ein Längen-Breiten-Verhältnis zwischen 1,2 und 1,5 aufweist.

**10.** Beleuchtungseinrichtung (1) nach Anspruch 9,
**dadurch gekennzeichnet,**
**dass** das Flächenelement (5,5',5'') ein Längen-Breiten-Verhältnis von im Wesentlichen 1,375 aufweist. ,

**11.** Beleuchtungseinrichtung (1) nach einem der Ansprüche 8 bis 10,
**dadurch gekenntzeichnet,**
**dass** die Leuchtdioden (2a-2e,3a-3d) der ersten und zweiten Gruppe (9,10) entlang der Diagonalen (14,15) des Flächenelements (5,5',5'') angeordnet sind, wobei entlang einer ersten Diagonale (14) zwei Leuchtdioden (3b,3c) der zweiten Gruppe (10) jeweils zwischen Leuchtdioden (2a,2c,2e) der ersten Gruppe (9) angeordnet sind, und wobei entlang der zweiten Diagonale (15) drei Leuchtdioden (2b,2c,2d) der ersten Gruppe (9) zwischen Leuchtdioden (3a,3d) der zweiten Gruppe (10) angeordnet sind.

**12.** Beleuchtungseinrichtung (1) nach Anspruch 11,
**dadurch gekennzeichnet,**
**dass** die Leuchtdioden (2a,2c,2e,3b,3c) auf der ersten Diagonale (14) und die Leuchtdioden (2b,2c,2d,3a,3d) auf der zweiten Diagonale (15) äquidistant angeordnet sind.

**13.** Beleuchtungseinrichtung (1) nach einem der Ansprüche 3 bis 12,
**dadurch gekennzeichnet,**
**dass** eine Leuchtdiode (4c) der dritten Gruppe (11) auf einer Mittelachse (8) des Flächenelementes (5,5',5'') angeordnet ist, und dass diese Leuchtdiode (4c) zu zwei Leuchtdioden (2d,2e) der ersten Gruppe (9) und zwei Leuchtdioden (3c,3d) der zweiten Gruppe (10) den gleichen Abstand (d) hat.

**14.** Beleuchtungseinrichtung (1) nach einem der Ansprüche 3 bis 13,
**dadurch gekennzeichnet,**
**dass** die Leuchtdioden (2a-2e;3a-3d;4a-4c) derselben Gruppe (9,10,11) in gleicher Weise angesteuert sind.

**15.** Beleuchtungseinrichtung (1) nach einem der Ansprüche 1 bis 14,
**dadurch gekennzeichnet,**
**dass** mehrere Flächenelemente (5,5',5'') angrenzend entlang einer gemeinsamen Mittelachse (8) aneinandergereiht sind, so dass sich das Gesamtmuster (13) der innerhalb eines jeden Flächenelements (5,5',5'') angeordneten Leuchtdioden (2a-2e,3a-3d,4a-4c) in zumindest einer Raumrichtung periodisch wiederholt.

**16.** Beleuchtungseinrichtung (1) nach Anspruch 15,
**dadurch gekennzeichnet,**
**dass** das einer Gruppe (11) eines Flächenelementes (5,5',5'') zugeordnete Gruppenmuster (20) sich mit dem Gruppenmuster (20) der gleichen Gruppe (11) eines benachbarten Flächenelementes (5,5',5'') zu einem flächenzentrierten Rechteckgitter (24) ergänzt.

**Claims**

1. Vehicle or aircraft interior lighting device (1) comprising a plurality of light-emitting diodes (2a-2e, 3a-3d, 4a-4c) of at least two groups (9, 10, 11), said light-emitting diodes being arranged on an area element (5, 5', 5"), wherein each of the light-emitting diodes is associated with one of the at least two groups, wherein each group (9, 10, 11) comprises a plurality of light-emitting diodes (2a-2e, 3a-3d, 4a-4c) of the same colour, and light-emitting diodes (2a-2e, 3a-3d, 4a-4c) in different groups (9, 10, 11) are of different colours, and wherein the light-emitting diodes (2a-2e, 3a-3d, 4a-4c) are distributed over the area element (5, 5', 5") in a two-dimensional geometrical overall pattern (13), and the area centroid (R) of the overall pattern (13) is located on a mid-axis (8) of the area element (5, 5', 5"), wherein, furthermore, the light-emitting diodes (2a-2e, 3a-3d, 4a-4c) in each group (9, 10, 11) are arranged with at least three light-emitting diodes distributed over the area element (5, 5', 5") in a two-dimensional geometrical group pattern (18, 19, 20) in such a way that the area centroid ($R_m$) of the respective group pattern (18, 19, 20) is likewise located on the mid-axis (8) of the area element (5, 5', 5"), **characterized in that** the area centroids ($R_m$) of at least two group patterns (18, 19, 20) are located at different points on the mid-axis (8) of the area element (5, 5', 5").

2. Lighting device according to Claim 1, **characterized in that** at least two groups (9, 10, 11) differ in terms of the respectively associated number ($N_m$) of light-emitting diodes (2a-2e, 3a-3d, 4a-4c).

3. Lighting device (1) according to Claim 1 or 2, **characterized in that** light-emitting diodes (2a-2e, 3a-3d, 4a-4c) in different groups (9, 10, 11) differ in terms of their colour, wherein the or each light-emitting diode (2a-2e) in a first group (9) is red, the or each light-emitting diode (3a-3d) in a second group (10) is blue, and the or each light-emitting diode (4a-4c) in a third group (11) is green.

4. Lighting device according to Claim 3, **characterized in that** the respective number ($N_m$) of light-emitting diodes (2a-2e; 3a-3d; 4a-4c) associated with the first group (9), the second group (10) and the third group (11) has a ratio of 5:4:3.

5. Lighting device (1) according to Claim 4, **characterized in that** the light-emitting diodes (2a-2e) in the first group (9) are arranged in a group pattern (18) in the form of a face-centred parallelogram.

6. Lighting device (1) according to Claim 4 or 5, **characterized in that** the light-emitting diodes (3a-3d) in the second group (10) are arranged in a group pattern (19) in the form of a simple parallelogram.

7. Lighting device (1) according to one of Claims 4 to 6, **characterized in that** the light-emitting diodes (4a-4c) in the third group (11) are arranged in a group pattern (20) in the form of an equilateral triangle.

8. Lighting device (1) according to one of Claims 1 to 7, **characterized in that** the area element (5, 5', 5") is rectangular.

9. Lighting device (1) according to Claim 8, **characterized in that** the area element (5, 5', 5") has a length-to-width ratio of between 1.2 and 1.5.

10. Lighting device (1) according to Claim 9, **characterized in that** the area element (5, 5', 5") has a length-to-width ratio of substantially 1.375.

11. Lighting device (1) according to one of Claims 8 to 10, **characterized in that** the light-emitting diodes (2a-2e, 3a-3d) in the first and second groups (9, 10) are arranged along the diagonals (14, 15) of the area elements (5, 5', 5"), wherein two light-emitting diodes (3b, 3c) in the second group (10) are arranged respectively between light-emitting diodes (2a, 2c, 2e) in the first group (9) along a first diagonal (14), and wherein three light-emitting diodes (2b, 2c, 2d) in the first group (9) are arranged between light-emitting diodes (3a, 3d) in the second group (10) along the second diagonal (15).

12. Lighting device (1) according to Claim 11, **characterized in that** the light-emitting diodes (2a, 2c, 2e, 3b, 3c) are arranged equidistantly on the first diagonal (14) and the light-emitting diodes (2b, 2c, 2d, 3a, 3d) are arranged equidistantly on the second diagonal (15).

13. Lighting device (1) according to one of Claims 3 to 12, **characterized in that** a light-emitting diode (4c) in the third group (11) is arranged on a mid-axis (8) of the area element (5, 5', 5"), and **in that** this light-emitting diode (4c) has the same distance (d) from two light-emitting diodes (2d, 2e) in the first group (9) and two light-emitting diodes (3c, 3d) in the second group (10).

**14.** Lighting device (1) according to one of Claims 3 to 13, **characterized in that** the light-emitting diodes (2a-2e; 3a-3d; 4a-4c) in the same group (9, 10, 11) are driven in the same way.

**15.** Lighting device (1) according to one of Claims 1 to 14, **characterized in that** a plurality of area elements (5, 5', 5") are arranged next to one another in a row so as to adjoin a common mid-axis (8), with the result that the overall pattern (13) of the light-emitting diodes (2a-2e, 3a-3d, 4a-4c) arranged within each area element (5, 5', 5") is repeated periodically in at least one spatial direction.

**16.** Lighting device (1) according to Claim 15, **characterized in that** the group pattern (20) associated with a group (11) of an area element (5, 5', 5") is supplemented by the group pattern (20) of the same group (11) of an adjacent area element (5, 5', 5") to form a face-centred rectangular grid (24).

## Revendications

**1.** Dispositif d'éclairage ou d'avion d'habitacle de véhicule (1), comprenant plusieurs diodes électroluminescentes (2a-2e, 3a-3d, 4a-4c) d'au moins deux groupes (9, 10, 11), disposées sur un élément de surface (5, 5', 5"), chacune des diodes électroluminescentes étant associée à l'un des au moins deux groupes,
chaque groupe (9, 10, 11) comprenant plusieurs diodes électroluminescentes de même couleur (2a-2e ; 3a-3d ; 4a-4c), et les diodes électroluminescentes (2a-2e, 3a-3d, 4a-4c) de différents groupes (9, 10, 11) ayant des couleurs différentes,
et les diodes électroluminescentes (2a-2e, 3a-3d, 4a-4c) étant réparties suivant un motif géométrique global (13) bidimensionnel sur l'élément de surface (5, 5', 5") et le centre de gravité de surface (R) du motif global (13) se trouvant sur un axe médian (8) de l'élément de surface (5, 5', 5"),
les diodes électroluminescentes (2a-2e ; 3a-3d ; 4a-4c) de chaque groupe (9, 10, 11) étant en outre réparties sur l'élément de surface (5, 5', 5") avec au moins trois diodes électroluminescentes dans un motif géométrique de groupe bidimensionnel (18, 19, 20) de telle sorte que le centre de gravité de surface ($R_m$) de chaque motif de groupe (18, 19, 20) se situe également sur l'axe médian (8) de l'élément de surface (5, 5', 5"),
**caractérisé en ce que**
les centres de gravité de surface ($R_m$) d'au moins deux motifs de groupe (18, 19, 20) se situent en des endroits différents sur l'axe médian (8) de l'élément de surface (5, 5', 5").

**2.** Dispositif d'éclairage selon la revendication 1,
**caractérisé en ce**
**qu'**au moins deux groupes (9, 10, 11) se distinguent par le nombre ($N_m$) respectivement associé de diodes électroluminescentes (2a-2e, 3a-3d, 4a-4c).

**3.** Dispositif d'éclairage (1) selon la revendication 1 ou 2,
**caractérisé en ce que**
les diodes électroluminescentes (2a-2e, 3a-3d, 4a-4c) de différents groupes (9, 10, 11) se distinguent par leurs couleurs, la ou chaque diode électroluminescente (2a-2e) d'un premier groupe (9) étant rouge, la ou chaque diode électroluminescente (3a-3d) d'un deuxième groupe (10) étant bleue, et la ou chaque diode électroluminescente (4a-4c) d'un troisième groupe (11) étant verte.

**4.** Dispositif d'éclairage (1) selon la revendication 3,
**caractérisé en ce que**
le nombre ($N_m$) respectivement associé au premier groupe (9), au deuxième groupe (10) et au troisième groupe (11) de diodes électroluminescentes (2a-2e, 3a-3d, 4a-4c) est dans un rapport de 5:4:3.

**5.** Dispositif d'éclairage (1) selon la revendication 4,
**caractérisé en ce que**
les diodes électroluminescentes (2a-2e) du premier groupe (9) sont disposées dans un motif de groupe (18) en forme de parallélogramme à faces centrées.

**6.** Dispositif d'éclairage (1) selon la revendication 4 ou 5,
**caractérisé en ce que**

les diodes électroluminescentes (3a-3d) du deuxième groupe (10) sont disposées dans un motif de groupe (19) en forme de parallélogramme simple.

7. Dispositif d'éclairage (1) selon l'une quelconque des revendications 4 à 6,
   **caractérisé en ce que**
   les diodes électroluminescentes (4a-4c) du troisième groupe (11) sont disposées dans un motif de groupe (20) en forme de triangle équilatéral.

8. Dispositif d'éclairage (1) selon l'une quelconque des revendications 1 à 7,
   **caractérisé en ce que**
   l'élément de surface (5, 5', 5") est rectangulaire.

9. Dispositif d'éclairage (1) selon la revendication 8,
   **caractérisé en ce que**
   l'élément de surface (5, 5', 5") présente un rapport longueur/largeur compris entre 1,2 et 1,5.

10. Dispositif d'éclairage (1) selon la revendication 9,
    **caractérisé en ce que**
    l'élément de surface (5, 5', 5") présente un rapport longueur/largeur de sensiblement 1,375.

11. Dispositif d'éclairage (1) selon l'une quelconque des revendications 8 à 10,
    **caractérisé en ce que**
    les diodes électroluminescentes (2a-2e, 3a-3d) du premier et du deuxième groupe (9, 10) sont disposées le long de la diagonale (14, 15) de l'élément de surface (5, 5', 5"), deux diodes électroluminescentes (3b, 3c) du deuxième groupe (10) étant disposées le long d'une première diagonale (14) à chaque fois entre des diodes électroluminescentes (2a, 2c, 2e) du premier groupe (9), et trois diodes électroluminescentes (2b, 2c, 2d) du premier groupe (9) étant disposées le long de la deuxième diagonale (15) entre des diodes électroluminescente (3a, 3d) du deuxième groupe (10).

12. Dispositif d'éclairage (1) selon la revendication 11,
    **caractérisé en ce que**
    les diodes électroluminescentes (2a, 2c, 2e, 3b, 3c) sont disposées sur la première diagonale (14) et les diodes électroluminescentes (2b, 2c, 2d, 3a, 3d) sont disposées sur la deuxième diagonale (15), de manière équidistante.

13. Dispositif d'éclairage (1) selon l'une quelconque des revendications 3 à 12,
    **caractérisé en ce**
    **qu'**une diode électroluminescente (4c) du troisième groupe (11) est disposée sur un axe médian (8) de l'élément de surface (5, 5', 5"), et en ce que cette diode électroluminescente (4c) est équidistante (d) de deux diodes électroluminescentes (2d, 2e) du premier groupe (9) et de deux diodes électroluminescentes (3c, 3d) du deuxième groupe (10).

14. Dispositif d'éclairage (1) selon l'une quelconque des revendications 3 à 13,
    **caractérisé en ce que**
    les diodes électroluminescentes (2a-2e, 3a-3d, 4a-4c) du même groupe (9, 10, 11) sont commandées de la même manière.

15. Dispositif d'éclairage (1) selon l'une quelconque des revendications 1 à 14,
    **caractérisé en ce que**
    plusieurs éléments de surface (5, 5', 5") sont alignés les uns après les autres en position adjacente le long d'un axe médian commun (8), de sorte que le motif global (13) des diodes électroluminescentes (2a-2e, 3a-3d, 4a-4c) disposées à l'intérieur de chaque élément de surface (5, 5', 5") se répète périodiquement dans au moins une direction spatiale.

16. Dispositif d'éclairage (1) selon la revendication 15,
    **caractérisé en ce que**
    le motif de groupe (20) associé à un groupe (11) d'un élément de surface (5, 5', 5") est complété par le motif de groupe (20) du même groupe (11) d'un élément de surface adjacent (5, 5', 5") pour former un réseau rectangulaire à faces centrées (24).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5808592 A
- WO 0250472 A1
- WO 0058664 A1